(19) Europäisches Patentamt
European Patent Office
Office européen des brevets

(11) **EP 2 090 829 A1**

(12) **EUROPEAN PATENT APPLICATION**

(43) Date of publication:
**19.08.2009 Bulletin 2009/34**

(51) Int Cl.:
***F23N 1/02*** (2006.01)   ***F23N 5/18*** (2006.01)
***F23R 3/36*** (2006.01)

(21) Application number: **08002767.5**

(22) Date of filing: **14.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **SIEMENS AKTIENGESELLSCHAFT**<br>**80333 München (DE)**<br><br>(72) Inventor: **Lam, Kam-Kei**<br>**LN4 2UN Bracebridge Heath (GB)** |

(54) **Burner arrangement and method of operating the same**

(57)      A burner arrangement, in particular a gas turbine burner arrangement is provided, with
- a number of burners (1),
- a fuel supply system (5, 7) which allows to distribute a total fuel mass flow to the burners (1) of the burner arrangement,
- a fuel allocation device (9) which is adapted to allocate a fraction of the total fuel mass flow to each burner (1) of the burner arrangement on the basis of an allocation signal,
- an air mass flow measuring device (3), which is adapted to determine measures for the individual air mass flows through the individual burners (1) of the burner arrangement and to output an air mass flow signal representing the determined measures, and
- a control device (11) which is connected to the air mass flow measuring device (3) for receiving the air mass flow signal and to the allocation device (9) for sending an allocation signal representing individual fuel allocations for the individual burners (1) of the burner arrangement, which individual fuel allocations are determined by the fraction of air mass flow through a respective individual burner (1) to the total air mass flow.

FIG 1

EP 2 090 829 A1

**Description**

The present invention relates to a burner arrangement with a number of burners and to a method of operating such a burner arrangement.

Within the world wide effort to reduce emissions in exhaust gases of gas turbines one aims to reduce in particular the $NO_x$ emissions. The $NO_x$ emission in a gas turbine is exponentially proportional to the highest temperature in the combustor. Modern premix low $NO_x$ burners achieve a low $NO_x$-emission by evenly mixing the fuel and air in order to make the chemical reaction temperature more homogeneous and in order to avoid local fuel rich hot spots. Although these measures are already successfully applied there is still room for improvements in reducing the $NO_x$ emissions of burner arrangements, in particular gas turbine burner arrangements.

It is therefore an objective of the present invention to provide an advantageous method of operating a burner arrangement, in particular a gas turbine burner arrangement, which helps to reduce the $NO_x$-emissions of the combustion process. It is a further objective of the present invention to provide an advantageous burner arrangement, in particular an advantageous gas turbine burner arrangement.

The first objective is solved by a method of operating a burner arrangement as claimed in claim 1. The further objective is solved by a burner arrangement as claimed in claim 7. The depending claims contain further developments of the invention.

In the inventive method of operating a burner arrangement, in particular a gas turbine burner arrangement, with a number of burners, a total fuel mass flow is distributed to the burners of the burner arrangement. For determining the fuel distribution the air mass flow through a burner is determined for each individual burner of the burner arrangement and the ratio of air mass flow through an individual burner to the total air mass flow through all burners is established for each individual burner. Then, the total fuel mass flow is distributed to the burners of the burner arrangement such that each individual burner is supplied with a fraction of the total fuel mass flow which is determined by the ratio of air mass flow through the respective individual burner to the total air mass flow. In particular, the fraction of fuel mass flow through a burner to the total fuel mass flow may correspond directly to the ratio of air mass flow through the respective individual burner to the total air mass flow. However, it is also possible to indirectly correlate the fuel fraction delivered to a burner to the air fraction of the total air mass flow for this burner, for example by using wights in order to take into account specific burner parameters.

The inventive method is based on the following considerations:

Although one has been successful in homogenising the chemical reaction temperature and in avoiding local fuel rich hot spots by premixing fuel and air for each burner, no measures have been taken to assure that all burners are operated with the same flame temperature. Prior to delivery to the burner the air passes through a complex cooling and air distribution system. This may result in an uneven distribution of air to different burners of the burner arrangement in a gas turbine. However burners receiving less air will operate with a higher fuel to air ratio as compared to burners receiving more air which results in a higher flame temperature. The increased flame temperature of such burners produce avoidable $NO_x$-emissions.

The inventive method provides measures for allowing to operate all burners with the same flame temperature since it allows for supplying each individual burner with a fraction of the total fuel mass flow which is adapted to the actual air mass flow through the burner. Therefore, fuel to air ratio can be controlled to be the same for each burner in the burner arrangement so that differences in the flame temperatures of the burners can be widely reduced. In other words, the invention provides a method to homogeneously operate burners by measuring the air distribution to burners and optimising the fuel distribution accordingly.

The method can be implemented within the scope of a control system if the air mass flows through the burners are repeatedly determined and the distribution of fuel to the burners is repeatedly updated. In this context, repeatedly determining the air mass flow and repeatedly updating the distribution of fuel can either be realised stepwise or continuously. This development of the inventive method allows for taking into account fluctuations in the distribution of air to the burners of the burner arrangement and hence to follow the fluctuations with the fuel allocation to the burners so as to keep the fuel distribution optimised despite the fluctuations in the air distribution.

The air mass flow through a burner with at least one air supply channel having a given loss coefficient may be easily determined from the pressure differential across the at least one air supply channel of the respective burner and its loss coefficient. As a loss coefficient may depend on the operation condition of the respective burner it is advantageous to use, in the scope of the inventive method, different loss coefficients for different operation conditions. By this measure, an optimised fuel distribution to the burners can be achieved and maintained even if the operation conditions of the burners change. The loss coefficients for different operation conditions may, for example, be given in form of a lookup table.

An inventive burner arrangement, which is in particular a gas turbine burner arrangement, comprises a number of burners, a fuel supply system which allows to distribute a total fuel mass flow to the burners of the burner arrangement, a fuel allocation device, an air mass flow measuring device, and a control device. The fuel allocation device is adapted to allocate a fraction of the total fuel mass flow to each burner of the burner arrangement on the basis of an allocation signal. The air mass flow measuring device is adapted to determine measures for the individual air mass flows through the individual burners of the burner arrangement and to output an air mass flow signal representing the determined measures. Furthermore, the control device is connected to the air mass flow measuring device for receiving the air mass flow signal and to the allocation device for sending an allocation signal. This allocation signal represents individual fuel allocations for the individual burners of the burner arrangement which individual fuel allocations are determined by the fraction of air mass flow to a respective individual burner to the total air mass flow.

The inventive burner arrangement is adapted to perform the inventive method and therefore achieves the advantages discussed above in the context of the inventive method.

Each burner of the inventive burner arrangement may comprise at least one air supply channel having a pressure loss coefficient. Then, the air mass flow measuring device may comprise a number of differential pressure sensors for measuring a pressure differential across an air supply channel with at least one differential pressure sensor being associated to each individual burner of the burner arrangement. Furthermore, the air mass flow measuring device or the control device comprises an air mass flow determination unit which determines the air mass flow through an individual burner from the pressure difference measured for the at least one air supply channel of the respective burner and the respective pressure loss coefficient(s). Since the loss coefficient for an individual air supply channel is constant, the air mass flow through this channel is proportional to the square root of the pressure difference. This means that the pressure difference, which is easily measurable, provides a direct measure for the air mass flow through the channel. The measuring device or the control device may further comprise a lookup table which contains loss coefficients for all air supply channels of the burner arrangement at different operation conditions to allow for an optimisation of fuel distribution at various operation conditions of the burner arrangement.

For allocating a determined fraction of fuel to each individual burner of the burner arrangement the allocation device may comprise a number of controllable valves. These controllable valves can be controlled by the control device on the basis of the allocation signal.

Further features, properties, and advantages of present invention will become clear from the following description of an embodiment of the invention in conjunction with the accompanying drawings.

Figure 1    schematically shows an embodiment for the inventive burner arrangement.

Figure 2    shows a burner which may be used in the inventive burner arrangement which is connected to a combustor.

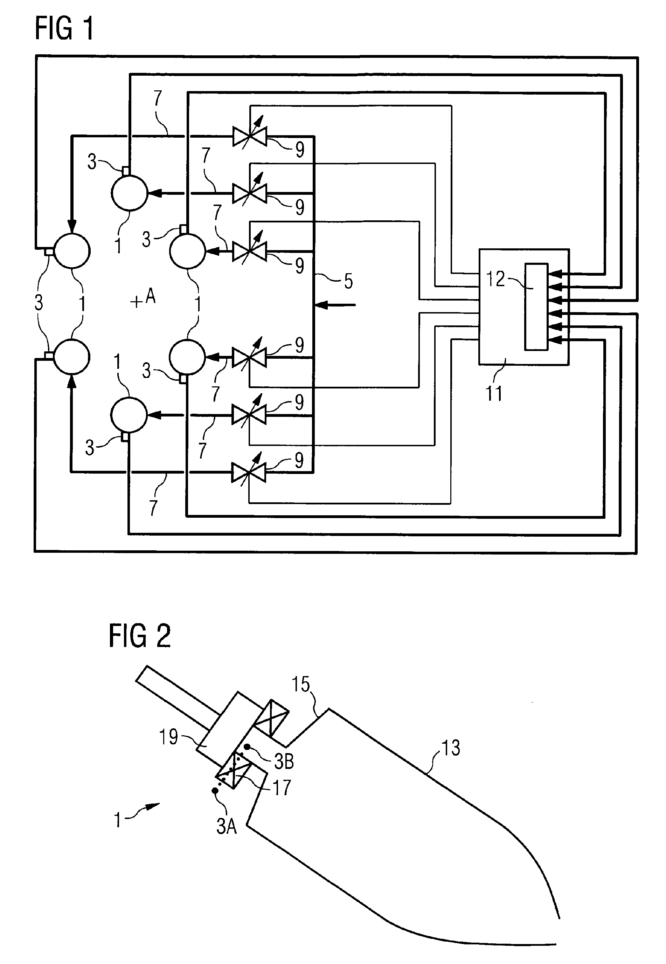

An inventive burner arrangement is shown in figure 1 in a highly schematic view. The burner arrangement comprises, in the present embodiment, six burners which are located on a common radius with respect to a central axis A. The burner arrangement further comprises a differential pressure sensor 3 at each burner 1 each differential pressure sensor being used as a part of an air mass flow measuring device. In addition, the burner arrangement comprises a fuel supply system with a central pipe 5 from which an individual branch pipe 7 extends to each of the burners 1 of the burner arrangement. Each branch pipe 7 is equipped with a controllable valve 9 which allows for controlling the amount of fuel delivered to the respective burner 1. Hence, the fuel supply system allows for a specific fuel allocation to each burner 1. In other words, the controllable valves 9 act as a fuel allocation device.

In addition, the burner assembly comprises a control device 11. The control device 11 is connected to each of the differential pressure sensors 3 for receiving an individual pressure difference value in form of an individual pressure difference signal for each burner 1. As will be explained later, the pressure difference values represent measures for the individual air mass flow through an air supply channel of a burner.

The control device 11 is further connected to each controllable valve 9 for delivering a control signal to the valves for setting the fuel flow through the valve and thereby setting the allocation of fuel to an individual burner 1. The control signal, which represents an allocation signal with individual fuel allocations for the individual burners 1 of the burner arrangement, is determined on the basis of the air mass flow through each individual burner as represented by the measured pressure difference. The air mass flows are determined by a mass flow determination unit 12 which is, in the present embodiment, integrated into the controller 11. However,the air mass flow determination unit could be integrated into an air mass flow measuring device comprising the differential pressure sensors 3.

An example for a burner 1 of the burner arrangement shown in figure 1 is shown in figure 2. The burner 1, which is located at the upstream end 15 of a combustion chamber 13, comprises an air supply channel which is implemented in form of a radial inflow swirler channel 17 in the present embodiment. The radial inflow swirler channel 17 is connected to a base plate 19 of the burner which comprises fuel delivery ducts and fuel nozzles (not shown) for injecting fuel into the air flowing through the radial inflow swirler 17. A differential pressure sensor measures the pressure at the location 3A, i.e. at the inflow end of the radial inflow swirler 17, and at the location 3B, i.e. at the outflow end of the radial inflow swirler 17, hence establishing a pressure difference value representing the pressure loss over the air in flow channel.

The pressure loss of the i-th burner $\Delta P_i$ with a loss coefficient $\xi_i$ based on a reference area $A_{ref}$ is correlated with the air mass flow through the air channel $m_{air,i}$ through the formula

$$\Delta p_i = \xi_i m_{air,i}^2 \frac{1}{2\rho A_{ref}^2} \ .$$

In this formula ρ represents the air density.

The loss coefficient across the radial inflow swirler channel generally is a pure hardware air flow resistance parameter and is independent to operation mode and flame temperature. The loss coefficient of each produced swirler can be measured in flow tests and implemented in the control logic of the control device 11.

Since the reference geometric area $A_{ref}$ of a burner and the air density ρ are constant for the burners 1 the air mass flow $m_{air,i}$ is proportional to the square root of the pressure difference divided by the loss coefficient $\xi_i$

$$m_{air,i} \propto \sqrt{\frac{\Delta p_i}{\xi_i}} \ .$$

Hence, the fraction $F_{air,i}$ of total air distributed to the i-th burner can be expressed by

$$F_{air,i} = \frac{m_{air,i}}{\sum_{i=1}^{N} m_{air,i}} = \frac{\sqrt{\frac{\Delta p_i}{\xi_i}}}{\sum_{i=1}^{N} \sqrt{\frac{\Delta p_i}{\xi_i}}} \ ,$$

where N stands for the total number of burners. Note that the constant reference geometric area $A_{ref}$ could be different for each of the burners due to manufacturing tolerances etc. This difference can be allowed to manifest itself as a difference in the loss coefficients $\xi_i$. A smaller reference geometric area $A_{ref}$ gives a higher pressure drop for a given mass flow, as would an increased loss coefficient $\xi_i$.

In order to achieve homogeneous flame temperature on all burners 1, one distributes a fuel fraction $F_{fuel,i}$ to the i-th burner which is given by

$$F_{fuel,i} = \frac{m_{fuel,i}}{\sum_{i=1}^{N} m_{fuel,i}} = \frac{m_{air,i}}{\sum_{i=1}^{N} m_{air,i}} = \frac{\sqrt{\frac{\Delta p_i}{\xi_i}}}{\sum_{i=1}^{N} \sqrt{\frac{\Delta p_i}{\xi_i}}} \ .$$

The right side of this formula may optionally be multiplied by a weight factor $w_i$ if special properties of the i-th burner shall be taken into account. The formula then reads

$$F_{fuel,i} = \frac{w_i \sqrt{\dfrac{\Delta p_i}{\xi_i}}}{\displaystyle\sum_{i=1}^{N} \sqrt{\dfrac{\Delta p_i}{\xi_i}}} \ .$$

In case the loss coefficients $\xi_i$ vary in different operation conditions the $\xi_i$ values can be measured in tests and implemented in the software of the control device 11, for example as a lookup table. The $\xi_i$ values used in the control procedure for the fuel distribution to the burners 1 can then be updated by using this table. The correlation on fuel distribution based on the measured pressure difference $\Delta P_i$ and the looked-up value for $\xi_i$ is still applicable in this case. Alternatively, variations in the loss coefficients due to different operation conditions of a burner could be taken into account by the weight factors $w_i$.

For controlling the fuel distribution to the burners 1, i.e. for setting a suitable fuel mass flow fraction for each burner 1 of the burner arrangement, the control device 11 calculates an individual allocation value for each burner 1 and outputs the allocation values in form of an allocation signal to the controllable valves 9. At the controllable valves 9 the amount of fuel delivered to the respective burner 1 is then set accordingly. The allocation values for the individual burners 1 are determined on the basis of the measured pressure difference for the air inflow channel of each burner 1, as it has been described above.

The inventive method and the inventive burner arrangement allow for actively controlling the fuel distribution to different burners on the basis of, e.g. a pressure difference measurement of individual burners. By using this control method, low $NO_x$ emissions can be achieved by operating all burners homogeneously, thus eliminating $NO_x$ which would occur in hot burners.

**Claims**

1. A method of operating a burner arrangement, in particular a gas turbine burner arrangement, with a number of burners (1), in which a total fuel mass flow is distributed to the burners (1) of the burner arrangement,
   **characterised in that**

   - the air mass flow through a burner (1) is determined for each individual burner (1) of the burner arrangement;
   - the ratio of air mass flow through an individual burner (1) to the total air mass flow through all burners (1) is established for each individual burner (1); and
   - the total fuel mass flow is distributed to the burners(1) of the burner arrangement such that each individual burner

   (1) is supplied with a fraction of the total fuel mass flow which is determined by the ratio of air mass flow through the respective individual burner (1) to the total air mass flow.

2. The method as claimed in claim 1,
   **characterised in that**
   the fraction of the total fuel mass flow corresponds the ratio of air mass flow through the respective individual burner (1) to the total air mass flow.

3. The method as claimed in claim 1 or claim 2,
   **characterised in that**
   the air mass flows through the burners (1) are repeatedly determined and the distribution of fuel to the burners (1) are repeatedly updated.

4. The method as claimed in any of the claims 1 to 3,
   **characterised in that**
   the air mass flow through a burner (1) with at least one air supply channel (17) having a given loss coefficient is determined from the pressure differential across the at least one air supply channel (17) of the respective burner (1) and its loss coefficient.

5. The method as claimed in claim 4,
   **characterised in that**
   different loss coefficients are used for different operation conditions of the burners (1).

6. The method as claimed in claim 5,
   **characterised in that**
   the loss coefficients for different operation conditions are given in form of a look up table.

7. A burner arrangement, in particular a gas turbine burner arrangement, with

   - a number of burners (1),
   - a fuel supply system (5, 7) which allows to distribute a total fuel mass flow to the burners (1) of the burner arrangement,
   - a fuel allocation device (9) which is adapted to allocate a fraction of the total fuel mass flow to each burner (1) of the burner arrangement on the basis of an allocation signal,
   - an air mass flow measuring device (3), which is adapted to determine measures for the individual air mass flows through the individual burners (1) of the burner arrangement and to output an air mass flow signal representing the determined measures, and
   - a control device (11) which is connected to the air mass flow measuring device (3) for receiving the air mass flow signal and to the allocation device (9) for sending an allocation signal representing individual fuel allocations for the individual burners (1) of the burner arrangement, which individual fuel allocations are determined by the fraction of air mass flow through a respective individual burner (1) to the total air mass flow.

8. The burner arrangement as claimed in claim 7, in which

   - each burner (1) comprises at least one air supply channel (17) having a pressure loss coefficient,
   - the air mass flow measuring device comprises a number of differential pressure sensors (3) for measuring a pressure differential across an air supply channel (17) with at least one differential pressure sensor (3) being associated to each individual burner (1) of the burner arrangement, and
   - the air mass flow measuring device or the control device (11) comprises an air mass flow determination unit (12) which determines the air mass flow through an individual burner from the pressure difference measured for the at least one air supply channel (17) of the respective burner (1) and the respective pressure loss coefficient (s).

9. The burner arrangement as claimed in claim 8, in which a look up table is present in the pressure measuring device or the control device (11) which contains loss coefficients for all air supply channels (17) of the burner arrangement at different operation conditions.

10. The burner arrangement as claimed in any of the claims 7 to 9, in which the allocation device comprises a number of controllable valves (9).

## FIG 1

## FIG 2

**European Patent Office**

**EUROPEAN SEARCH REPORT**

Application Number

EP 08 00 2767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 020 717 A (PEARCE JR RUFUS B) 13 February 1962 (1962-02-13) | 1-3,7,10 | INV. F23N1/02 |
| Y | * column 1, line 11 - line 16 * <br> * column 2, line 27 - line 41 * <br> * column 4, line 13 - line 45 * <br> * column 4, line 62 - line 69 * <br> * column 7, line 36 - line 41 * <br> * column 7, line 56 - line 66 * <br> ----- | 4-6,8,9 | F23N5/18 F23R3/36 |
| Y | JP 2006 292285 A (SAMSON CO LTD) 26 October 2006 (2006-10-26) * abstract * <br> ----- | 4-6,8,9 | |
| X | US 2007/163267 A1 (FLOHR PETER [CH] ET AL) 19 July 2007 (2007-07-19) * paragraphs [0010], [0016], [0017], [0019], [0021], [0030], [0032] * <br> ----- | 1-4,7,8, 10 | |
| A | US 5 661 969 A (BEEBE KENNETH W [US] ET AL) 2 September 1997 (1997-09-02) * column 2, line 15 - line 32 * <br> * column 2, line 46 - line 64 * <br> * column 3, line 23 - line 32 * <br> * column 4, line 54 - column 5, line 4 * <br> * column 5, line 26 - line 39 * <br> ----- | 1,7 | TECHNICAL FIELDS SEARCHED (IPC) F23N F02C |
| A | EP 1 331 448 A (GEN ELECTRIC [US]) 30 July 2003 (2003-07-30) * paragraphs [0007], [0009], [0010], [0015], [0016], [0028] - [0030], [0033], [0054] * <br> ----- | 1,7 | |
| A | US 3 739 576 A (CHAMBERLAIN J) 19 June 1973 (1973-06-19) * column 1, line 4 - line 17 * <br> * column 2, line 63 - column 3, line 4 * <br> ----- | 1,7 | |
| | -/-- | | |

The present search report has been drawn up for all claims

| Place of search | Date of completion of the search | Examiner |
|---|---|---|
| The Hague | 20 August 2008 | Mougey, Maurice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 08 00 2767

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 896 502 A (RAVEL MAURICE [FR] ET AL) 30 January 1990 (1990-01-30)<br>* column 1, line 1 - line 19 *<br>* column 1, line 43 - column 2, line 22 *<br>* column 2, line 30 - line 38 *<br>* column 3, line 57 - column 4, line 29 *<br>----- | 1,7 | |
| | | | **TECHNICAL FIELDS SEARCHED (IPC)** |

The present search report has been drawn up for all claims

| Place of search | Date of completion of the search | Examiner |
|---|---|---|
| The Hague | 20 August 2008 | Mougey, Maurice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 2767

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2008

| Patent document cited in search report | | | Publication date | Patent family member(s) | | Publication date |
|---|---|---|---|---|---|---|
| US 3020717 | A | | 13-02-1962 | NONE | | |
| JP 2006292285 | A | | 26-10-2006 | NONE | | |
| US 2007163267 | A1 | | 19-07-2007 | DE 102004015187 A1 | | 20-10-2005 |
| | | | | EP 1730449 A1 | | 13-12-2006 |
| | | | | WO 2005093327 A1 | | 06-10-2005 |
| US 5661969 | A | | 02-09-1997 | NONE | | |
| EP 1331448 | A | | 30-07-2003 | JP 2003232230 A | | 22-08-2003 |
| | | | | US 2003144787 A1 | | 31-07-2003 |
| | | | | US 2004025512 A1 | | 12-02-2004 |
| US 3739576 | A | | 19-06-1973 | NONE | | |
| US 4896502 | A | | 30-01-1990 | DE 3631287 A1 | | 28-12-1989 |
| | | | | FR 2629136 A1 | | 29-09-1989 |
| | | | | GB 2228048 A | | 15-08-1990 |

EPO FORM P0459

For more details about this annex : see Official Journal of the European Patent Office, No. 12/82